# EUROPEAN PATENT SPECIFICATION

(11) **EP 2 984 976 B1**
(45) Date of publication and mention of the grant of the patent: **28.06.2017**
(21) Application number: 15179450.0
(22) Date of filing: 03.08.2015
(51) Int. Cl.: A47J 47/00, A47J 47/12, A47J 47/10

(54) **BREAD STORAGE CONTAINER**
BROTAUFBEWAHRUNGSBEHÄLTER
RÉCIPIENT POUR LE STOCKAGE DE PAIN

(30) Priority: 13.08.2014 US 201414458706
(43) Date of publication of application: 17.02.2016
(73) Proprietor: Dart Industries Inc., Orlando, FL 32837 (US)
(72) Inventor: de Groote, Jan-Hendrik, Orlando, FL 32837 (US)
(74) Representative: Barton, Matthew Thomas

(56) References cited:
- DE-A1- 10 064 706
- DE-U- 1 977 940
- DE-U1- 9 101 092
- US-A- 3 097 030

## Description

### CROSS REFERENCE TO RELATED APPLICATIONS

Not applicable.

### STATEMENT REGARDING FEDERALLY SPONSORED RESEARCH

Not applicable.

### BACKGROUND OF THE INVENTION

The present invention relates in general to kitchen appliances, and more particularly to food storage containers, such as a bread storage container, or bread box. The bread storage container includes a novel combination of a base and a cover, which may include a condensation control for controlling the humidity inside the bread storage container. Still further, the bread storage container may include a cutting board which may be provided on top of a cover for the bread storage container, or inside the base of the bread storage container, or may be rested on a surface, such as a countertop in a kitchen or restaurant. The bread storage container may further include a trough for collecting food particles, such as bread crumbs, so that when the cutting board is on the cover of the bread storage container, the crumbs of bread cut on the cutting board are prevented from falling off the cover.

Food storage containers for home and light commercial use are known in the art. An example of such a food storage container, in particular a cheese serving and storage container, is in applicant's U.S. Patent No. 7,364,048 to Cautereels et al., issued April 29, 2008, which is incorporated by reference herein.

### SUMMARY OF THE INVENTION

An object of the present invention is to provide a food storage container which overcomes the drawbacks of the prior art.

A further object of the present invention is to provide a food storage container particularly suited for storing baked goods, such as bread.

Another object of the present invention is to provide a food storage container particularly suited for storing baked goods, such as bread, and including a cutting board.

A further object of the present invention is to provide a food storage container including a cutting board for cutting food, such as bread, inside the container, on top of the container, or on a surface next to the storage container.

These and other objects are achieved by a food storage device providing improved features. The inventive food storage device, which may be a bread storage container, or bread box, includes a novel combination of a base and a cover, which may include a condensation control for controlling the humidity inside the bread storage container. The bread storage container may include a cutting board which may be provided on top of the cover for the bread storage container, or inside the base of the bread storage container, or may be rested on a surface, such as a countertop in a kitchen or restaurant. The bread storage container may further include a trough for collecting food particles, such as bread crumbs, so that when the cutting board is on the cover of the bread storage container, the crumbs of bread cut on the cutting board are prevented from falling off the cover.

According to the present invention, there is provided a food storage device, comprising: a base having a closed bottom, a sidewall, and an open top; a cover sealing said open top; and said cover including an upper trough for securing a cutting board on said open top.

DE1977940 discloses a box for storing food. The box has a removable cutting board provided on its cover.

Preferably, said closed bottom includes a lower trough for securing said cutting board inside said base on said closed bottom.

Conveniently, a cutting board is provided, said cutting board includes an extension which engages said upper trough and said lower trough.

Advantageously, said upper trough catches food particles on said cutting board when said cutting board is secured in said upper trough, and said upper trough catches food particles when said cutting board is not secured in said upper trough.

Preferably, a cutting board is provided, said cutting board includes an extension which engages said upper trough.

Advantageously, a rib is provided on an upper side of said closed bottom for elevating food stored in said base above said closed bottom to enhance air movement between said closed bottom and food stored in said base or between said closed bottom and a cutting board stored on said base.

Conveniently, feet are provided on a lower face of said cutting board for being seated on a flat surface.

Preferably, feet are provided on a lower face of said cover for being seated on a surface.

Conveniently, a condensation control is provided between said sidewall and said cover, said condensation control including holes fluidly connecting the interior and exterior of the base; and an extension is on said condensation control for preventing food particles from entering said holes.

### BRIEF DESCRIPTION OF THE DRAWINGS

The objects and features of the invention noted above are explained in more detail with reference to the drawings, in which like reference numerals denote like elements, and in which:
FIG. 1 is a top front perspective view of the food storage container according to the present invention in the operative configuration;
FIG. 2 is a top front exploded perspective view of the food storage container;
FIG. 3 is a cross-sectional side view along line 3-3 of Fig. 1;
FIG. 4 is a cross-sectional side view along line 4-4 of Fig. 1;
FIG. 5 is a bottom front perspective view of the cutting board of the food storage container;
FIG. 6 is a bottom front perspective view of the cover of the food storage container;
FIG. 7 is a top front perspective view of the food storage container according to the present invention in the operative configuration with bread being cut on the cutting board on top of the container;
FIG. 8 is a top front perspective view of the food storage container according to the present invention in the operative configuration with bread being cut on the cutting board on top of the cover on a support surface;
FIG. 9 is a top front perspective view of the food storage container according to the present invention in the operative configuration with bread being cut on the cutting board inside the container; and
FIG. 10 is a cross-sectional side view along line 10-10 of Fig. 9.

### DETAILED DESCRIPTION OF THE INVENTION

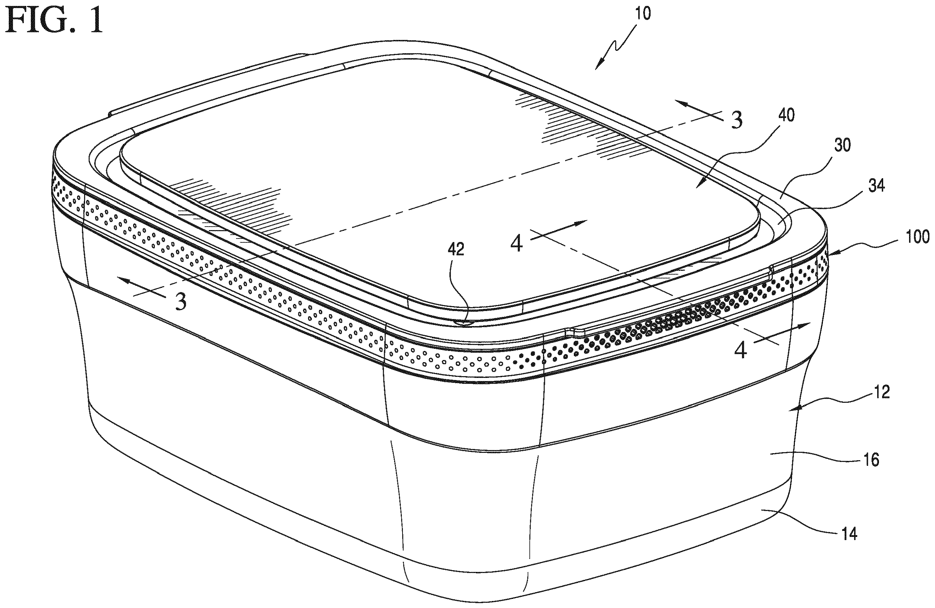

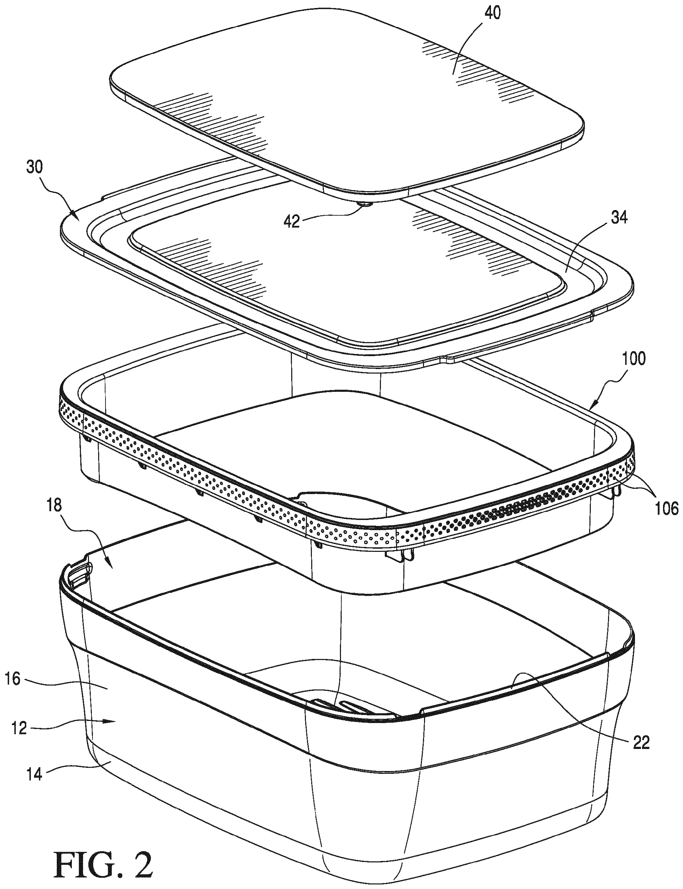

With reference to FIGS. 1-10, an embodiment of a food storage device 10 according to the invention is shown. Food storage device 10 may be in the form of a food storage container, such as the illustrated bread storage container or bread box.

Food storage device 10 may include a base 12 having a closed bottom 14, a side wall 16 having an upper rim 22, and an open top. A cover 30 may be provided for closing or sealing the open top 18 of base 12. Cover 30 may include an upper trough 34 configured for securing a cutting board 40 on the cover. Cover 30 may likewise include a lip 38. As shown, cutting board 40 may be supported on top of cover 30, although it is contemplated that cutting board 40 may be engaged with cover 30 on a lower face thereof, depending on the intended use.

Conveniently, cover 30 may include a trough 34 which is configured for securing cutting board 40 in place. Trough 30 likewise is provided to prevent food particles, such as bread crumbs, from leaving the top of cover 30, as will be readily appreciated.

Cutting board 40 may include an extension 44 which engages upper trough 34, and which likewise engages a lower trough 54 provided on closed bottom 14 of the breadbox.

Trough 54 may include an outer wall 56 and an inner wall 58. Extension 44 of cutting board 40 engages one or both of outer and inner walls 56, 58, in use.

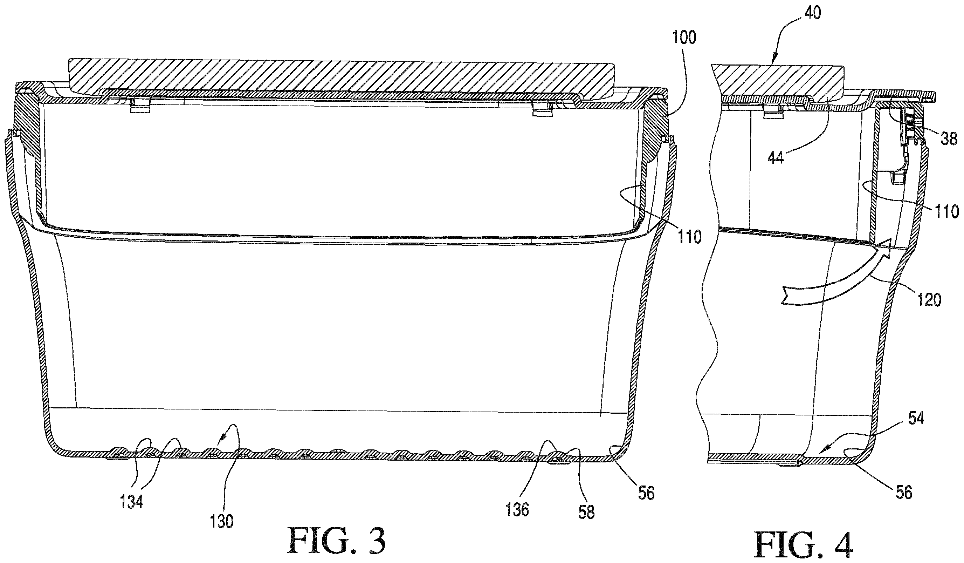

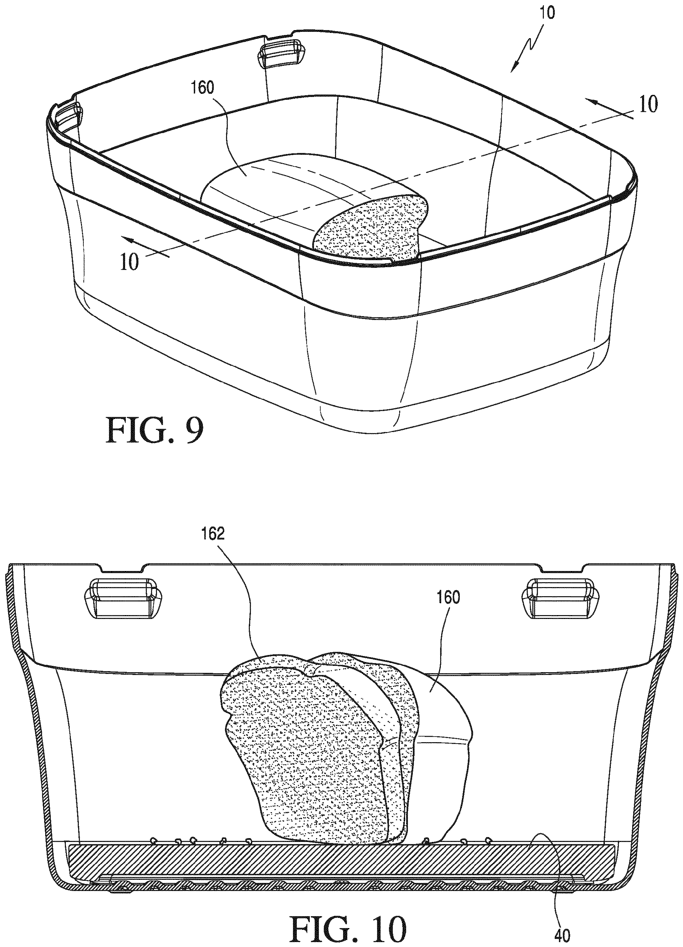

Still further, a condensation control 100 may be provided between base 12 and cover 30, as shown. Condensation control 100 may be engaged by lip 38 of cover 30. Condensation control 100 may include one or more holes 106 through which air, and humidity, may flow, as may be readily appreciated by a person having ordinary skill in the art. Further, an extension 110 may be provided adjacent to or connected with the remainder of condensation control 100. Extension 110 functions to prevent food, such as bread, stored in storage device 10 from contacting holes 106 to ensure that food, such as bread crumbs, do not enter holes 106 and reduce or block airflow which prevents humidity from the inside of container 10. Airflow, schematically shown as an arrow 120, may still occur, as shown in FIG.4. It is possible for an appropriate film to be secured to, adhered to, or molded over holes 106 to selectively allow (or prevent/reduce) the passage of moisture or certain gasses such that the condensation control 100 serves to create modified atmosphere within the device 10. If condensation control 100 is unnecessary or not desired by a user, then condensation control 100 is set aside, and cover 30 may rest on sidewall 16 of base 12. In that case, lip 38 would engage upper rim 18 of base 12 to seal storage device 10, as will be readily appreciated. An airflow enhancing element 130, which may include one or more ribs 134 and 136, may be provided on an upper face of base or closed bottom 14. Airflow enhancing element 130 may be configured for elevating food, such as bread, stored base 12 as well as for enhancing air movement between closed bottom 14 and a cutting board 40 stored in the container on base 12; i.e., inside base 12 on closed bottom 14, as best seen in FIG.10. As shown in FIG.3, rib 136 which may be considered an outer rib may include or define wall 58 of trough 54.

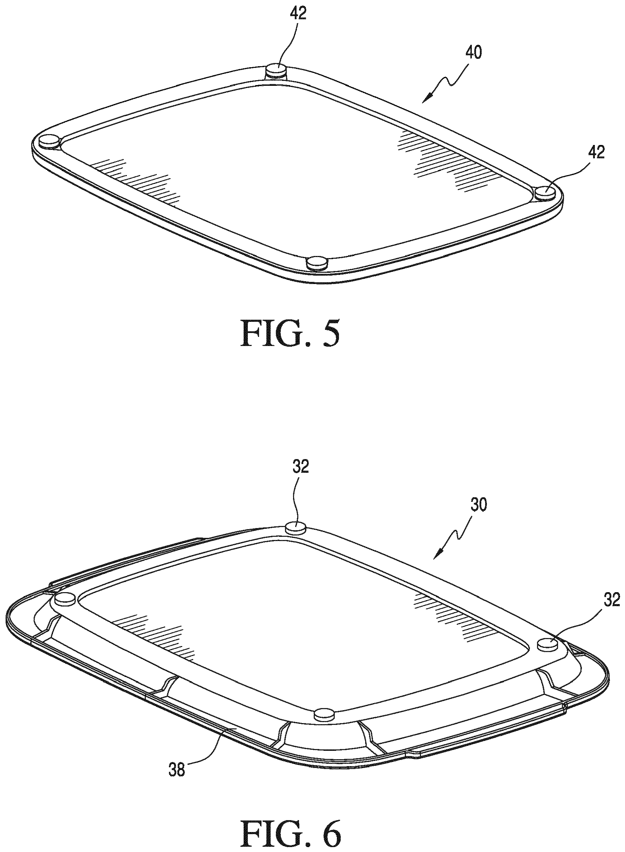

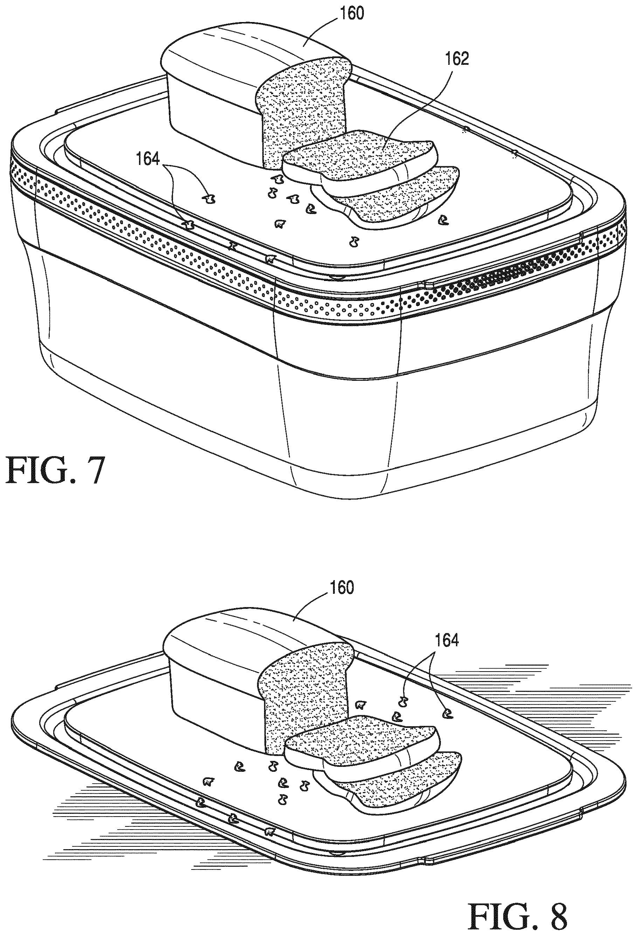

FIGS. 5 and 6 illustrate the one or more feet 42 of cutting board 40 as well as the one or more feet 32 on cover 30. Feet 42 and 32 may be slip-resistant feet made of materials which increase friction between a surface on which cutting board 40 and cover 30 respectively, rest. That is particularly useful when a user is cutting food, such as the illustrated loaf of bread 160, as shown in FIGS. 7 - 10.

FIG.7 shows bread storage container 10 in use with bread 160 in place on top of cutting board 40 when a user is cutting bread 160 to provide slices 162 of the bread. As will be readily appreciated, food particles, such as the illustrated crumbs 164 typically result. Trough 34 on cover 30 catches bread crumbs 164, as shown, to keep them from falling off cover 30 and, hence, onto a food preparation surface.

FIG.8 shows lid or cover 30 seated on a surface with cutting board 40 in place on the cover, so that trough 34 catches crumbs 164. While not shown, the cutting board 40 may alternatively be removed from cover 30 and placed directly upon the counter top or food preparation surface, allowing the device 10 to remain closed while cutting the food removed from the device 10. If desired, the user may then open the cover 30 and place the entire cutting board 40 (with the food still resting thereon) within the base 12 as shown in Fig. 10.

Thus, it will be seen that the invention has provided a novel food storage container such as a bread storage device, by which a user has a secure cutting board 40, a crumb catching trough 34 for use when the user cuts bread on the cutting board on top of the cover as shown in FIG. 7, on top of cover 30 on a food preparation surface, such as shown in FIG. 8, as well as the case when the user prefers to cut food, such as bread 160, inside bread storage container 10 as shown in FIGS. 9 and 10.

From the foregoing it will be seen that this invention is one well adapted to attain all ends and objects set forth above together with the other advantages which are inherent within its structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter herein set forth of shown in the accompanying drawings is to be interpreted as illustrative, and not in a limiting sense.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A food storage device (10), comprising:
a base (12) having a closed bottom (14), a sidewall (16), and an open top (18);
a cover (30) for sealing said open top;
**characterized in that**:
said cover (30) includes an upper trough (34) for securing a cutting board (40) on said open top (18); and said closed bottom (14) includes a lower trough (54) for securing said cutting board (40) inside said base (12) on said closed bottom (14).

2. A device (10) as in Claim 1, wherein:
a cutting board (40) is provided, said cutting board (40) includes an extension (44) which engages said upper trough (34) and said lower trough (54).

3. A device (10) as in Claim 2, wherein:
said upper trough (34) catches food particles on said cutting board (40) when said cutting board (40) is secured in said upper trough (34), and said upper trough (34) catches food particles when said cutting board (40) is not secured in said upper trough (34).

4. A device (10) as in Claim 1, wherein:
a cutting board (40) is provided, said cutting board (40) includes an extension (44) which engages said upper trough (34).

5. A device (10) as in any preceding Claim, wherein:
a rib (134, 136) is provided on an upper side of said closed bottom (14) for elevating food stored in said base (12) above said closed bottom (14) to enhance air movement between said closed bottom (14) and food stored in said base (12) or between said closed bottom (14) and a cutting board (40) stored on said base (13).

6. A device (10) as in Claim 2, wherein:
feet (42) are provided on a lower face of said cutting board (40) for being seated on a flat surface.

7. A device (10) as in any preceding Claim, wherein:
feet (32) are provided on a lower face of said cover (30) for being seated on a surface.

8. A device (10) as in any preceding Claim, wherein:
a condensation control (100) is provided between said sidewall (16) and said cover (30), said condensation control (100) including holes (106) fluidly connecting the interior and exterior of the base (12); and
an extension (110) is on said condensation control (100) for preventing food particles from entering said holes (106).

## Patentansprüche

1. Lebensmittelaufbewahrungsvorrichtung (10), umfassend:
eine Basis (12) mit einem geschlossenen Boden (14), einer Seitenwand (16) und einer offenen Oberseite (18);
einen Deckel (30) zum Verschließen der offenen Oberseite;
**dadurch gekennzeichnet, dass**:
der Deckel (30) eine obere Rinne (34) zum Einfügen eines Schneidbretts (40) auf der offenen Oberseite (18) und der geschlossene Boden (14) eine untere Rinne (54) zum Einfügen des Schneidbretts (40) in das Innere der Basis (12) auf dem geschlossenen Boden (14) umfasst.

2. Vorrichtung (10) nach Anspruch 1, wobei:
ein Schneidbrett (40) bereitgestellt wird, wobei das Schneidbrett (40) eine Ausweitung (44) umfasst, die die obere Rinne (34) und die untere Rinne (54) in Eingriff nimmt.

3. Vorrichtung (10) nach Anspruch 2, wobei:
die obere Rinne (34) Lebensmittelpartikel auf dem Schneidbrett (40) auffängt, wenn das Schneidbrett (40) in die obere Rinne (34) eingefügt ist, und die obere Rinne (34) Lebensmittelpartikel auffängt, wenn das Schneidbrett (40) nicht in die obere Rinne (34) eingefügt ist.

4. Vorrichtung (10) nach Anspruch 1, wobei:
ein Schneidbrett (40) bereitgestellt wird, wobei das Schneidbrett (40) eine Ausweitung (44) umfasst, die die obere Rinne (34) in Eingriff nimmt.

5. Vorrichtung (10) nach einem vorhergehenden Anspruch, wobei:
eine Rippe (134, 136) auf einer oberen Seite des geschlossenen Bodens (14) zum Anheben von Lebensmitteln, die in der Basis (12) aufbewahrt sind, über den geschlossenen Boden (14) vorgesehen ist, um die Luftbewegung zwischen dem geschlossenen Boden (14) und den Lebensmitteln, die in der Basis (12) aufbewahrt sind, oder zwischen dem geschlossenen Boden (14) und einem Schneidbrett (40), das auf der Basis (13) aufbewahrt ist, zu verbessern.

6. Vorrichtung (10 nach Anspruch 2, wobei:
Füße (42) auf einer unteren Fläche des Schneidbretts (40) zum Aufsetzen auf eine flache Oberfläche vorgesehen sind.

7. Vorrichtung (10) nach einem vorhergehenden Anspruch, wobei:
Füße (32) auf einer unteren Fläche des Deckels (30) zum Aufsetzen auf eine Oberfläche vorgesehen sind.

8. Vorrichtung (10) nach einem vorhergehenden Anspruch, wobei:
eine Kondensationskontrolle (100) zwischen der Seitenwand (16) und dem Deckel (30) vorgesehen ist, wobei die Kondensationskontrolle (100) Löcher (106) umfasst, die das Innere und das Äußere der Basis (12) fluidmäßig verbinden; und
eine Ausweitung (110) sich an der Kondensationskontrolle (100) zur Verhinderung, dass Lebensmittelpartikel in die Löcher (106) gelangen, befindet.

## Revendications

1. Dispositif de stockage d'aliments (10), comprenant :
une base (12) ayant un fond fermé (14), une paroi latérale (16) et une partie supérieure ouverte (18) ;
un couvercle (30) pour sceller ladite partie supérieure ouverte ;
**caractérisé par le fait que** :
ledit couvercle (30) comprend un creux supérieur (34) pour fixer une planche à découper (40) sur ladite partie supérieure ouverte (18) ; et ledit fond fermé (14) comprend un creux inférieur (54) pour fixer ladite planche à découper (40) à l'intérieur de ladite base (12) sur ledit fond fermé (14).

2. Dispositif (10) selon la revendication 1, dans lequel :
une planche à découper (40) est prévue, ladite planche à découper (40) comprend une extension (44) qui engage ledit creux supérieur (34) et ledit creux inférieur (54).

3. Dispositif (10) selon la revendication 2, dans lequel :
ledit creux supérieur (34) capture des particules alimentaires sur ladite planche à découper (40) lorsque ladite planche à découper (40) est fixée dans ledit creux supérieur (34), et ledit creux supérieur (34) capture des particules alimentaires lorsque ladite planche à découper (40) n'est pas fixée dans ledit creux supérieur (34).

4. Dispositif (10) selon la revendication 1, dans lequel :
une planche à découper (40) est prévue, ladite planche à découper (40) comprend une extension (44) qui engage ledit creux supérieur (34).

5. Dispositif (10) selon l'une quelconque des revendications précédentes, dans lequel :
une nervure (134, 136) est prévue sur un côté supérieur dudit fond fermé (14) pour surélever l'aliment stocké dans ladite base (12) au-dessus dudit fond fermé (14) afin de favoriser un mouvement d'air entre ledit fond fermé (14) et l'aliment stocké dans ladite base (12) ou entre ledit fond fermé (14) et une planche à découper (40) stockée sur ladite base (13).

6. Dispositif (10) selon la revendication 2, dans lequel :
des pieds (42) sont prévus sur une face inférieure de ladite planche à découper (40) pour prendre appui sur une surface plate.

7. Dispositif (10) selon l'une quelconque des revendications précédentes, dans lequel :
des pieds (32) sont prévus sur une face inférieure dudit couvercle (30) pour prendre appui sur une surface.

8. Dispositif (10) selon l'une quelconque des revendications précédentes, dans lequel :
une régulation de condensation (100) est prévue entre ladite paroi latérale (16) et ledit couvercle (30), ladite régulation de condensation (100) comprenant des trous (106) reliant fluidiquement l'intérieur et l'extérieur de la base (12) ; et
une extension (110) se trouve sur ladite régulation de condensation (100) pour empêcher des particules alimentaires d'entrer dans lesdits trous (106).
